# EUROPÄISCHE PATENTSCHRIFT

(11) **EP 2 963 370 B1**
(45) Veröffentlichungstag und Bekanntmachung des Hinweises auf die Patenterteilung: **13.06.2018**
(21) Anmeldenummer: 15001882.8
(22) Anmeldetag: 25.06.2015
(51) Int. Cl.: F25J 3/04

(54) **VERFAHREN UND VORRICHTUNG ZUR TIEFTEMPERATURZERLEGUNG VON LUFT**
METHOD AND DEVICE FOR THE CRYOGENIC DECOMPOSITION OF AIR
PROCEDE ET DISPOSITIF CRYOGENIQUES DE SEPARATION D'AIR

(30) Priorität: 05.07.2014 EP 14002309
(43) Veröffentlichungstag der Anmeldung: 06.01.2016
(73) Patentinhaber: Linde Aktiengesellschaft, 80331 München (DE)
(72) Erfinder: Goloubev, Dimitri, 80804 München (DE)
(74) Vertreter: Imhof, Dietmar

(56) Entgegenhaltungen:
- EP-A1- 2 520 886
- WO-A2-2012/019753
- DE-A1- 10 339 230
- DE-A1-102007 014 643
- US-A1- 2005 126 221
- US-A1- 2006 010 912

## Beschreibung

Die Erfindung betrifft ein Verfahren zur Tieftemperaturzerlegung von Luft. Ein derartiges Verfahren ist aus US 7437890 bekannt.

Der "Luftnachverdichter" und der turbinengetriebene Nachverdichter sind bei der Erfindung seriell verbunden; der Nachverdichter kann stromaufwärts oder stromabwärts des Luftnachverdichters angeordnet sein.

Unter einem "Hauptluftverdichter" wird hier eine mehrstufige Maschine verstanden, deren Stufen einen gemeinsamen Antrieb (Elektromotor, Dampfturbine oder Gasturbine) aufweisen und in einem gemeinsamen Gehäuse angeordnet sind. Er kann zum Beispiel durch einen Getriebeverdichter gebildet werden bei welchem die Stufen um das Getriebegehäuse herum gruppiert sind. Dieses Getriebe besitzt ein Großrad welches mehrere parallele Ritzelwellen mit jeweils einer oder zwei Stufen antreibt.

Der "Luftnachverdichter" kann durch eine mehrstufige Maschine gebildet werden, die getrennt vom Hauptluftverdichter ist; alternativ werden Hauptluftverdichter und Luftnachverdichter durch einen einzige mehrstufige Maschine gebildet, der Stufen einen gemeinsamen Antrieb aufweisen und in einem gemeinsamen Gehäuse angeordnet sind. Die ersten Stufen dieser Maschine realisieren dann den Hauptluftverdichter, die letzte(n) Stufe(n) den Luftnachverdichter.

Verfahren und Vorrichtungen zur Tieftemperaturzerlegung von Luft sind zum Beispiel aus Hausen/Linde, Tieftemperaturtechnik, 2. Auflage 1985, Kapitel 4 (Seiten 281 bis 337) bekannt.

Das Destillationssäulen-System der Erfindung kann als Ein-Säulen-System ausgebildet sein, als Zwei-Säulen-System (zum Beispiel als klassisches Linde-Doppelsäulensystem), oder auch als Drei- oder Mehr-Säulen-System. Es kann zusätzlich zu den Kolonnen zur Stickstoff-Sauerstoff-Trennung weitere Vorrichtungen zur Gewinnung hochreiner Produkte und/oder anderer Luftkomponenten, insbesondere von Edelgasen aufweisen, beispielsweise eine Argongewinnung und/oder eine Krypton-Xenon-Gewinnung.

Bei dem Prozess wird ein flüssig auf Druck gebrachter erster Produktstrom im Hauptwärmetauscher verdampft und schließlich als gasförmiges Druckprodukt gewonnen. Diese Methode wird auch als Innenverdichtung bezeichnet. Für den Fall eines überkritischen Drucks findet kein Phasenübergang im eigentlichen Sinne statt, der Produktstrom wird dann "pseudo-verdampft".

Gegen den (pseudo-)verdampfenden Produktstrom wird ein unter hohem Druck stehender Wärmeträger verflüssigt (beziehungsweise pseudo-verflüssigt, wenn er unter überkritischem Druck steht). Der Wärmeträger wird häufig durch einen Teil der Luft gebildet, im vorliegenden Fall insbesondere durch den ersten Teilstrom und den zweiten (und gegebenenfalls den dritten) Teil des zweiten Teilstroms der Einsatzluft.

Innenverdichtungsverfahren sind zum Beispiel bekannt aus DE 830805, DE 901542 (= US 2712738/US 2784572), DE 952908, DE 1103363 (= US 3083544), DE 1112997 (= US 3214925), DE 1124529, DE 1117616 (= US 3280574), DE 1226616 (= US 3216206), DE 1229561 (= US 3222878), DE 1199293, DE 1187248 (= US 3371496), DE 1235347, DE 1258882 (= US 3426543), DE 1263037 (= US 3401531), DE 1501722 (= US 3416323), DE 1501723 (= US 3500651), DE 253132 (= US 4279631), DE 2646690, EP 93448 B1 (= US 4555256), EP 384483 B1 (= US 5036672), EP 505812 B1 (= US 5263328), EP 716280 B1 (= US 5644934), EP 842385 B1 (= US 5953937), EP 758733 B1 (= US 5845517), EP 895045 B1 (= US 6038885), DE 19803437 A1, EP 949471 B1 (= US 6185960 B1), EP 955509 A1 (= US 6196022 B1), EP 1031804 A1 (= US 6314755), DE 19909744 A1, EP 1067345 A1 (= US 6336345), EP 1074805 A1 (= US 6332337), DE 19954593 A1, EP 1134525 A1 (= US 6477860), DE 10013073 A1, EP 1139046 A1, EP 1146301 A1, EP 1150082 A1, EP 1213552 A1, DE 10115258 A1, EP 1284404 A1 (= US 2003051504 A1), EP 1308680 A1 (= US 6612129 B2), DE 10213212 A1, DE 10213211 A1, EP 1357342 A1 oder DE 10238282 A1DE 10302389 A1, DE 10334559 A1, DE 10334560 A1, DE 10332863 A1, EP 1544559 A1, EP 1585926 A1, DE 102005029274 A1EP 1666824 A1,EP 1672301 A1, DE 102005028012 A1, WO 2007033838 A1, WO 2007104449 A1, EP 1845324 A1, DE 102006032731 A1, EP 1892490 A1, DE 102007014643 A1, A1, EP 2015012 A2, EP 2015013 A2, EP 2026024 A1 , WO 2009095188 A2 oder DE 102008016355 A1.

In dieser Anmeldung werden mehrfach Prozessparameter wie Mengenströme oder Drücke beschrieben, die in einem Betriebsmodus "kleiner" oder "größer" als in einem anderen Betriebsmodus sind. Damit sind hier gezielte Veränderungen des entsprechenden Parameters durch Regel- und/oder Stelleinrichtungen gemeint und nicht natürliche Schwankungen innerhalb eines stationären Betriebszustands. Diese gezielten Veränderungen können direkt durch Einstellung des Parameters selbst bewirkt werden oder indirekt durch Einstellung anderer Parameter, die Einfluss auf den zu verändernden Parameter haben. Insbesondere ist ein Parameter dann "größer" beziehungsweise "kleiner", wenn der Unterschied zwischen den Mittelwerten des Parameters in den verschiedenen Betriebsmodi mehr als 2 %, insbesondere mehr als 5 %, insbesondere mehr als 10 % beträgt.

Bei den Druckangaben werden hier die natürlichen Druckverluste in der Regel nicht einbezogen. Drücke werden hier als "gleich" gewertet, wenn der Druckunterschied zwischen den entsprechenden Stellen nicht größer als die natürlichen Leitungsverluste sind, die durch Druckverluste in Rohrleitungen, Wärmetauschern, Kühlern, Adsorbern etc. verursacht werden. Zum Beispiel erfährt der erste Produktstrom einen Druckverlust in den Passagen des Hauptwärmetauschers; trotzdem werden hier der Abgabedruck des Druckgasprodukts stromabwärts des Hauptwärmetauschers und der Druck stromaufwärts des Hauptwärmetauschers gleichermaßen als "der erste Produktdruck" bezeichnet. Umgekehrt ist der zweite Druck eines Stroms stromabwärts gewisser Verfahrensschritte nur dann "niedriger" oder "höher" als der erste Druck stromaufwärts dieser Schritte, wenn die entsprechende Druckdifferenz höher als die natürlichen Leitungsverluste sind, also insbesondere die Druckerhöhung durch mindestens eine Verdichterstufe beziehungsweise die Druckverminderung gezielt durch mindestens ein Drosselventil und/oder mindestens eine Entspannungsmaschine (Expansionsturbine) erfolgt.

Der "Hauptwärmetauscher" dient zur Abkühlung von Einsatzluft in indirektem Wärmeaustausch mit Rückströmen aus dem Destillationssäulen-System. Er kann aus einem einzelnen oder mehreren parallel und/oder seriell verbundenen Wärmetauscherabschnitten gebildet sein, zum Beispiel aus einem oder mehreren Plattenwärmetauscher-Blöcken. DE102007014643 A1 zeigt ein Verfahren zur Tieftemperaturzerlegung von Luft in einem Doppelsäulenverfahren mit einem Hauptluftverdichter und turbinengetriebenen kalt und warm ansaugenden Nachverdichtern. Das in DE102007014643 A1 gezeigte Verfahren zielt hauptsächlich auf die effiziente Produktion von gasförmigem Drucksauerstoff, erlaubt aber auch den Abzug kleiner Mengen von flüssigem Sauerstoff. Der Erfindung liegt die Aufgabe zugrunde, ein Verfahren der eingangs genannten Art und eine Vorrichtung anzugeben, die mit stark variierendem Flüssigproduktanteil gefahren werden kann. Zum "Flüssigproduktanteil" zählen dabei nur Ströme, welche die Luftzerlegungsanlage flüssig verlassen und beispielsweise in einen Flüssigtank eingeleitet werden, nicht aber innenverdichtete Ströme, die zwar dem Destillationssäulen-System flüssig entnommen, aber innerhalb der Luftzerlegungsanlage verdampft oder pseudo-verdampft und schließlich in gasförmigem Zustand aus der Luftzerlegungsanlage herausgeführt werden.

Diese Aufgabe wird durch die Merkmale des Patentanspruchs 1 gelöst.
Bei der Erfindung ist der "erste Betriebsmodus" für eine besonders hohe Flüssigproduktion, insbesondere für maximale Flüssigproduktion (Gesamtmenge an Flüssigprodukten, die aus der Luftzerlegungsanlage abgezogen wird) ausgelegt. Der "zweite Betriebsmodus" ist demgegenüber für einen geringeren Flüssigproduktanteil ausgelegt, der zum Beispiel auch null sein kann (reiner Gasbetrieb). Die Gesamtmenge an Flüssigprodukten beträgt im zweiten Betriebsmodus beispielsweise 0 %, oder liegt etwas höher, zum Beispiel zwischen 15 % und 50 %. (Alle Prozentangaben beziehen sich hier und im Folgenden auf die molare Menge, soweit nichts anderes angegeben ist. Die molare Menge kann beispielsweise in Nm³/h angegeben werden.)
Bei dem erfindungsgemäßen Verfahren wird ein Kaltverdichter eingesetzt, der entweder nur im zweiten Betriebsmodus betrieben wird (und damit abschaltbar ist) und im ersten Betriebsmodus nicht - oder aber im ersten Betriebsmodus mit niedrigerer Last gefahren wird als im zweiten. Es erscheint auf den ersten Blick nicht zielführend, in dem Betrieb mit maximaler Flüssigproduktion weniger Turbinen zu betrieben, das Turbinen grundsätzlich zur Produktion der Kälte für die Produktverflüssigung eingesetzt werden können. Im Rahmen der Erfindung hat es sich jedoch herausgestellt, dass durch diese Maßnahme eine besonders starke Variation der Flüssigproduktmenge möglich ist, wobei in beiden Betriebsmodi ein zufriedenstellender Wirkungsgrad erreicht wird, also insgesamt ein vergleichsweise geringer Energieverbrauch.

Unter einem "Kaltverdichter" wird hier ein Verdichtungsorgan verstanden, bei dem das Gas der Verdichtung bei einer Temperatur zugeführt wird, die deutlich unterhalb der Umgebungstemperatur liegt, im allgemeinen unterhalb von 250 K, vorzugsweise unterhalb von 200 K.

Der Kaltverdichter kann bei dem erfindungsgemäßen Verfahren durch einen Elektromotor angetrieben werden. In vielen Fällen ist es jedoch günstig, eine Turbinen-Kaltverdichter-Kombination einzusetzen, wie es im Patentanspruch 2 beschrieben ist. Die Luftmenge, die als fünfter Luftstrom durch die zweite Turbine geht, die den Kaltverdichter antreibt, ist in dem ersten Betriebsmodus geringer als im zweiten Betriebsmodus. In einem extremen Beispiel ist die Turbinen-Kaltverdichter-Kombination im ersten Betriebsmodus vollständig außer Betrieb, also die entsprechende Luftmenge gleich Null.

Der Eintrittsdruck der zweiten Turbine kann etwa gleich dem Eintrittsdruck der ersten Turbine sein; vorzugsweise sind die beiden Eintrittsdrücke aber verschieden. Insbesondere kann der Eintrittsdruck der zweiten Turbine niedriger als derjenige der ersten Turbine sein und zum Beispiel bei dem ersten Luftdruck oder dem zweiten Luftdruck liegen.

Es ist günstig, wenn im zweiten Betriebsmodus nur ein relativ kleiner Teil der Einsatzluft auf den dritten, höheren Luftdruck verdichtet wird, wie es in Patentanspruch 3 beschrieben wird. Der dritte Luftdruck kann außerdem niedriger liegen als beim ersten Betriebsmodus.

Vorzugsweise wird der dritte Luftstrom unter dem zweiten Luftdruck in die erste Turbine eingeführt.

In besonders bevorzugten Ausführungsform wird der dritte Luftstrom in der ersten Turbine auf einen Austrittsdruck entspannt wird, der gleich dem Betriebsdruck der Hochdrucksäule (plus Leitungsverlusten) ist.

Der Austrittsdruck der zweiten Turbine kann ebenfalls gleich dem Betriebsdruck der Hochdrucksäule (plus Leitungsverlusten) sein oder auch niedriger liegen, zum Beispiel beim Betriebsdruck der Niederdrucksäule (plus Leitungsverlusten), siehe Patentansprüche 5 und 6. Der dritte Teilstrom wird dann beispielsweise in die Niederdrucksäule eingeleitet.

Ansonsten können die entspannten Teilströme zum Teil oder vollständig in die Hochdrucksäule eingeleitet werden, wie es die Patentansprüche 8 und 9 erläutern.

Grundsätzlich kann der Luftnachverdichter durch eine oder mehrere vom Hauptluftverdichter unabhängige Verdichterstufen gebildet werden. Gemäß einer speziellen Ausgestaltung der Erfindung wird aber der Luftnachverdichter einen zweiten Satz von Stufen einer kombinierten Maschine gebildet; deren erster Satz von Stufen den Hauptluftverdichter bilden. Der Hauptluftverdichter wird regelmäßig durch zwei oder mehr Stufen gebildet, der Luftnachverdichter durch eine oder zwei Stufen beispielsweise von der oder den letzten Stufen der kombinierten Maschine.

Vorzugsweise wird im zweiten Betriebsmodus eine geringere Menge des vierten Luftstroms bis zum kalten Ende des Hauptwärmetauschers gefahren als im ersten Betriebsmodus.

Zusätzlich kann die Anlage ein dritte Turbine aufweisen, die nur im zweiten Betriebsmodus betrieben wird (Patentanspruch 11), oder im ersten Betriebsmodus mit einem niedrigeren Durchsatz als im zweiten.

Diese treibt vorzugsweise einen dritten Nachverdichter an, der mit dem zweiten Satz von Luftverdichterstufen und dem ersten turbinengetriebenen Nachverdichter in Serie geschaltet ist, wobei es wiederum nicht auf die Reihenfolge ankommt. Der zweite Nachverdichter kann in dem zweiten Betriebsmodus über eine Bypassleitung umgangen werden.

Wie in Patentanspruch 13 erläutert kann in Verfahren mehr als ein Innenverdichtungsprodukt erzeugt werden, auch mehr als zwei Innenverdichtungsprodukte. Die verschiedenen Innenverdichtungsprodukte können sich in ihrer chemischen Zusammensetzung unterschieden (zum Beispiel Sauerstoff/Stickstoff oder auch Sauerstoff oder Stickstoff verschiedener Reinheit) oder in ihrem Druck oder in beidem.

Die Erfindung betrifft außerdem eine Luftzerlegungsanlage in Form einer Vorrichtung gemäß Patentanspruch 15. Die erfindungsgemäße Vorrichtung kann durch Vorrichtungsmerkmale ergänzt werden, die den Merkmalen der abhängigen Verfahrensansprüche entsprechen.

Bei den "Mitteln zum Umschalten zwischen einem ersten und einem zweiten Betriebsmodus" handelt es sich um komplexe Regel- und Steuerungsvorrichtungen, die im Zusammenwirken ein mindestens teilweise automatisches Umschalten zwischen den beiden Betriebsmodi ermöglichen, beispielsweise um ein entsprechend programmiertes Betriebsleitsystem.

Die Erfindung sowie weitere Einzelheiten der Erfindung werden im Folgenden anhand von in den Zeichnungen schematisch dargestellten Ausführungsbeispielen näher erläutert. Hierbei zeigen:
- Figur 1: ein erstes Ausführungsbeispiel eines erfindungsgemäßen Systems mit zwei Turbinen,
- Figuren 1A und 1B: zwei Abwandlungen der Figur 1,
- Figur 2: ein zweites Ausführungsbeispiel mit drei Turbinen,
- Figuren 2A und 2B: zwei Abwandlungen der Figur 2,
- Figur 3: ein drittes Ausführungsbeispiel, bei dem die Turbinen-Kaltverdichter-Kombination auch im ersten Betriebsmodus durchströmt wird, und
- Figuren 3A und 3B: zwei Abwandlungen der Figur 3,

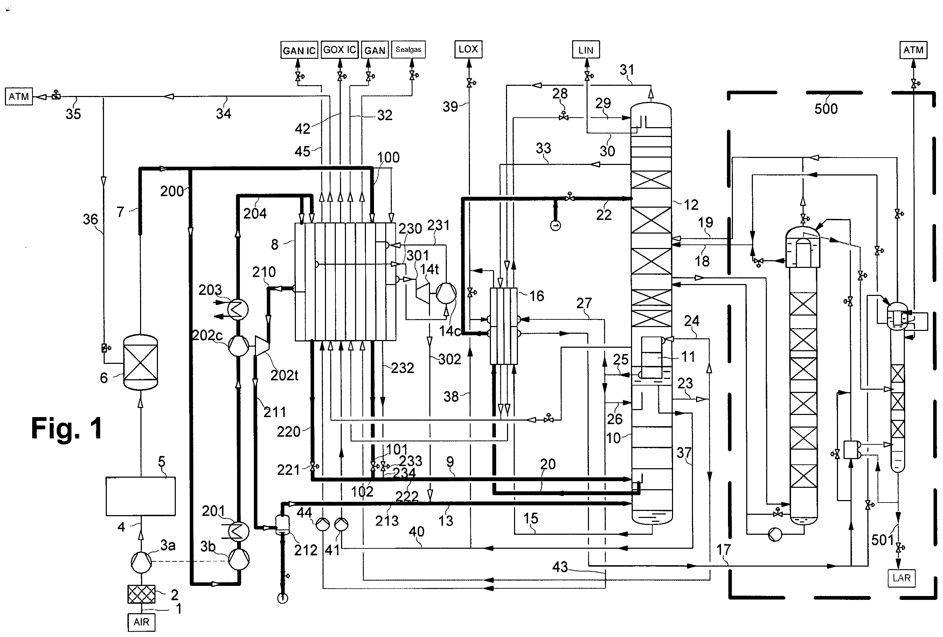

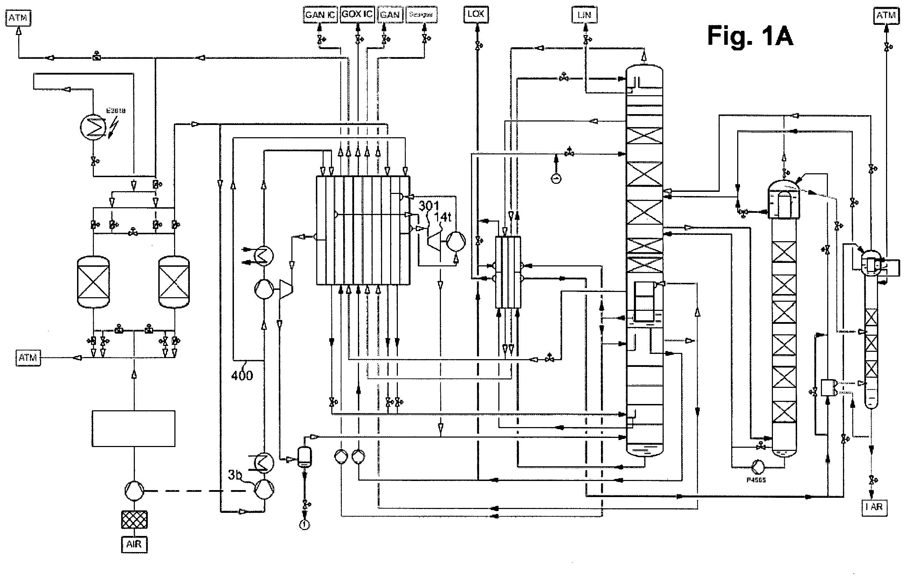

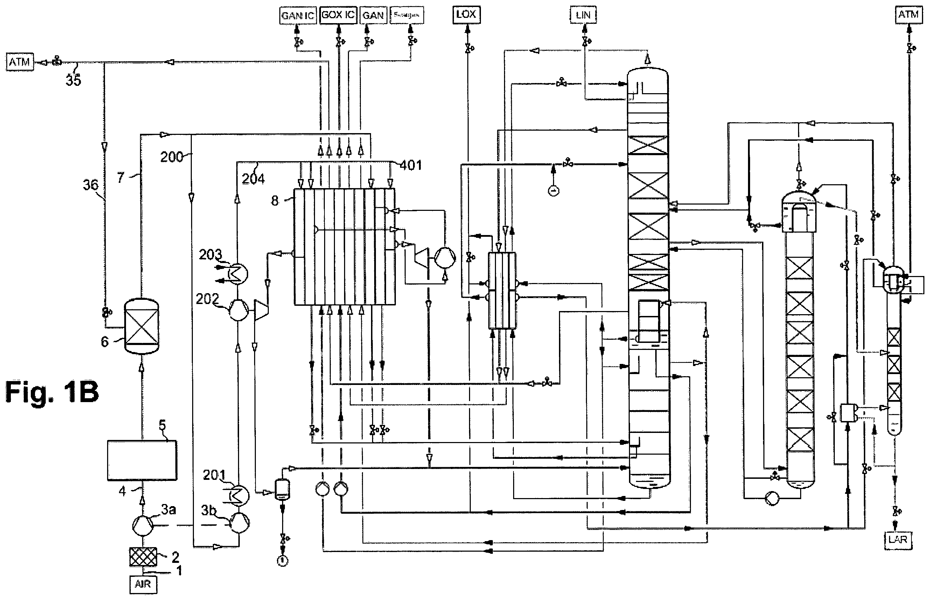

Das erste Ausführungsbeispiel der Erfindung wird im Folgenden zunächst anhand des ersten Betriebsmodus erläutert, der hier auf maximale Flüssigproduktion ausgelegt ist. Hierbei strömt Luft nur durch die in **Figur 1** fett dargestellten Leitungen; die übrigen Luftleitungen werden in dem ersten Betriebsmodus nicht durchströmt. Atmosphärische Luft 1 (AIR) wird über ein Filter 2 von einem ersten Satz 3a von einem Hauptluftverdichter 3a angesaugt und auf einen ersten Luftdruck von vorzugsweise 10 bar bis 14 bar, beispielsweise von 11,7 bar verdichtet. In dem konkreten Beispiel weist der Hauptluftverdichter vier Verdichterstufen auf. Stromabwärts des Hauptluftverdichters 3a wird die verdichtete Gesamtluft 4 unter dem ersten Luftdruck in einer Vorkühleinrichtung 5 und anschließend in einer Reinigungseinrichtung 6 behandelt. Die gereinigte Gesamtluft 7 wird in einen ersten Luftstrom 100 und einen zweiten Luftstrom 200 aufgeteilt.

Der erste Luftstrom 100 wird in einem Hauptwärmetauscher 8 vom warmen bis zum kalten Ende abgekühlt und dabei (pseudo-)verflüssigt und anschließend in einem Drosselventil 101 auf etwa den Betriebsdruck der später erläuterten Hochdrucksäule entspannt, der vorzugsweise 5 bar bis 7 bar, beispielsweise 6 bar beträgt. Der entspannte erste Luftstrom 102 wird über Leitung 9 dem Destillationssäulen-System zugeführt, das eine Hochdrucksäule 10, einen Hauptkondensator 11, der als Kondensator-Verdampfer ausgebildet ist, und eine Niederdrucksäule 12 aufweist.

Der zweite Luftstrom 200 wird in einem Luftnachverdichter 3b, der hier durch die Endstufe 3b einer kombinierten Maschine 3a/3b gebildet wird, und in einem ersten turbinengetriebenen Nachverdichter 202c auf einen zweiten Luftdruck von vorzugsweise 20 bar bis 25 bar, beispielsweise von 21,8 bar nachverdichtet. Der nachverdichtete zweite Luftstrom 204 wird in einen ersten und einen zweiten Teil aufgeteilt, einen dritten Luftstrom 210 und einen vierten Luftstrom 220.

Der dritte Luftstrom 210 wird dem Hauptwärmetauscher 8 am warmen Ende zugeführt und bei einer ersten Zwischentemperatur wieder entnommen. Unter dieser Zwischentemperatur und dem zweiten Luftdruck wird der dritte Luftstrom einer ersten Turbine 202t zugeführt und dort arbeitsleistend auf den Betriebsdruck der Hochdrucksäule 10 entspannt, der 5 bar bis 7 bar, beispielweise 6 bar beträgt. Die erste Turbine 202t ist mechanisch mit dem ersten Nachverdichter 202c gekoppelt. Der arbeitsleistend entspannte dritte Luftstrom 211 wird in einem Abscheider (Phasentrenner) 212 eingeleitet und dort von einem geringen Flüssiganteil befreit. Anschließend strömt er rein gasförmig über die Leitungen 213 und 13 zum Sumpf der Hochdrucksäule 10. Der Turbineneintrittsdruck ist hier gleich dem zweiten Luftdruck.

Der vierte Luftstrom 220 wird ebenfalls am warmen Ende dem Hauptwärmetauscher 8 zugeleitet, durchströmt diesen allerdings bis zum kalten Ende und wird dabei abgekühlt und (pseudo-)verflüssigt. Anschließend wird er in einem Drosselventil entspannt und gelangt über die Leitungen 222 und 9 in die Hochdrucksäule 10.

Die in Figur 1 dargestellt Luftzerlegungsanlage weist außerdem eine zweite Turbine 14t auf, die mit einem Kaltverdichter 14c gekoppelt ist; diese Maschine ist in dem Ausführungsbeispiel im ersten Betriebsmodus außer Betrieb.

In dem Destillationssäulen-System wird die Sumpfflüssigkeit 15 der Hochdrucksäule in einem Unterkühlungs-Gegenströmer 16 abgekühlt und über Leitung 17 einem Argonteil 500 zugeleitet, der später erläutert wird. Von dort tritt sie zum Teil flüssig (Leitung 18) und zum Teil gasförmig (Leitung 19) inter Niederdrucksäulendruck wieder aus und wird an geeigneter Stelle in die Niederdrucksäule 12 eingespeist. (Falls kein Argonteil vorhanden ist, wird die unterkühlte Sumpfflüssigkeit unmittelbar auf Niederdrucksäulendruck entspannt und in die Niederdrucksäule eingeleitet.)

Mindestens ein Teil der über Leitung 9 in die Hochdrucksäule 10 geleiteten Flüssigluft wird über Leitung 18 wieder entnommen, ebenfalls im Unterkühlungs-Gegenströmer 16 abgekühlt und über Ventil 21 und Leitung 22 der Niederdrucksäule 12 zugeführt.

Der gasförmige Kopfstickstoff 23 der Hochdrucksäule 10 wird zu einem ersten Teil 24 in den Verflüssigungsraum des Hauptkondensators 11 eingeleitet und dort im Wesentlichen vollständig verflüssigt. Der dabei gewonnene Flüssigstickstoff 25 wird zu einem ersten Teil 26 als Rücklauf auf die Hochdrucksäule 10 aufgegeben. Ein zweiter Teil 27 wird im Unterkühlungs-Gegenströmer 16 abgekühlt und über Ventil 28 und Leitung der Niederdrucksäule 12 am Kopf zugeführt. Ein Teil davon wird im ersten Betriebsmodus über Leitung 30 wieder entnommen und als Flüssigstickstoffprodukt (LIN) gewonnen und aus der Luftzerlegungsanlage abgezogen.

Vom Kopf der Niederdrucksäule, in dem ein Druck von 1,2 bar bis 1,6 bar, beispielweise 1,3 bar herrscht, wird gasförmiger Niederdruckstickstoff 31 entnommen, im Unterkühlungs-Gegenströmer 16 und im Hauptwärmetauscher 8 angewärmt und über Leitung 32 als gasförmiges Niederdruckprodukt (GAN) abgezogen. Gasförmiger Unreinstickstoff 33 aus der Niederdrucksäule wird ebenfalls in Unterkühlungs-Gegenströmer 16 und Hauptwärmetauscher 8 angewärmt. Der warme Unreinstickstoff 34 kann entweder über Leitung 35 in die Atmosphäre (ATM) abgeblasen oder über Leitung 36 als Regeneriergas in der Reinigungseinrichtung 6 eingesetzt werden.

Vom Sumpf der Niederdrucksäule 12 (genau genommen aus dem Verdampfungsraum des Hauptkondensators 11) wird über Leitung 37 flüssiger Sauerstoff abgezogen. Ein erster Teil 38 wird gegebenenfalls im Unterkühlungs-Gegenströmer 16 unterkühlt und über Leitung 39 als Flüssigsauerstoffprodukt (GOX) gewonnen und aus der Luftzerlegungsanlage abgezogen. Ein zweiter Teil 40 bildet den "ersten Produktstrom", wird in einer Pumpe 41 auf einen ersten Produktdruck von beispielsweise 31 bar gebracht, unter diesem hohen Druck in dem Hauptwärmetauscher 16 verdampft oder pseudo-verdampft und auf etwa Umgebungstemperatur angewärmt. Der warme Drucksauerstoff 42 wird als sauerstoffreiches erstes Druckgasprodukt (GOX IC) abgegeben.

Ein weiteres Innenverdichtungsprodukt kann aus einem dritten Teil 43 des flüssigen Stickstoffs 25 aus dem Hauptkondensator 11 gewonnen werden. Dieser wird als "zweiter Produktstrom" in einer Pumpe 44 flüssig auf einen zweiten Produktdruck von beispielsweise 12 bar gebracht. Unter diesem zweiten Produktdruck wird er im Hauptwärmetauscher 8 verdampft und auf etwa Umgebungstemperatur angewärmt. Der warme Druckstickstoff 45 wird schließlich unter dem zweiten Produktdruck als stickstoffreiches Druckgasprodukt (GAN IC) abgegeben.

Falls ein Argonprodukt benötigt wird, weist die Luftzerlegungsanlage außerdem einen Argonteil 500 auf, der wie in EP 2447563 A1 beschrieben funktioniert und ein weiteres Flüssigprodukt in Form flüssigen Reinargons (LAR) produziert, das über Leitung 501 abgezogen wird.

Die "erste Gesamtmenge an Flüssigprodukten", die in dem ersten Betriebsmodus aus der Luftzerlegungsanlage abgezogen wird, setzt sich bei diesem Ausführungsbeispiel aus den Strömen 30 (LIN), 39 (LOX) und 501 (LAR) zusammen.

In einem zweiten Betriebsmodus wird die Anlage mit einer geringeren "zweiten Gesamtmenge an Flüssigprodukten" gefahren. In der Regel wird die Strömungsmenge in mindestens einer der Leitungen 30 und 39 reduziert, vorzugsweise in beiden. Der Betrieb des Argonteils wird vorzugsweise konstant gehalten, womit auch die LAR-Menge gleich bleibt. Auch die Mengen und Drücke der Innenverdichtungsprodukte 42, 45 bleiben konstant.

Die Gesamtluftmenge wird reduziert, sodass bereit die ersten Stufen 3a des Hauptluftverdichters 3a/3b weniger Energie verbrauchen. Außerdem werden Menge und Druck des zweiten Teilstroms 204 stark vermindert, sodass auch die Endstufe 3b des Hauptluftverdichters 3a/3b weniger belastet wird. Die dadurch für die Innenverdichtung fehlende Luftmenge in Leitung 220 wird dadurch kompensiert, dass ein dritter Teil 230 des zweiten Luftstroms 204 in dem Kaltverdichter 14c auf einen dritten, noch höheren Druck von beispielsweise 45 bar gebracht wird und unter diesem sehr hohen Druck den Hauptwärmetauscher bis zum kalten Ende durchströmt. Der kalte pseudo-verflüssigte dritte Teil 232 wird in einem Drosselventil 233 auf Hochdrucksäulendruck entspannt und über die Leitungen 234 und 9 der Hochdrucksäule 10 zugeführt.

Der Kaltverdichter 14c wird von der zweiten Expansionsturbine 14t angetrieben, in der ein dritter Teilstrom 301 des verdichteten Gesamtluftstroms 7 als "fünfter Luftstrom" arbeitsleistend entspannt wird von dem ersten Luftdruck auf den Betriebsdruck der Hochdrucksäule 10.

Die folgende Tabelle zeigt in einem konkreten Zahlenbeispiel einen Vergleich zwischen erstem und zweitem Betriebsmodus auf, wobei hier der zweite Betriebsmodus als reiner Gasbetrieb (außer Argon) ausgestaltet ist.

| *Produkt* | *Konstante Produktparameter* | *Erster Betriebsmodus* | *Zweiter Betriebsmodus* |
|---|---|---|---|
| GOX IC | 31 bar und 99,8 mol-% | 18000 Nm3/h | 18000 Nm3/h |
| LOX | 99,8 mol-% | 2000 Nm3/h | 0 |
| GAN IC | 1 ppm O2 | 7000 Nm3/h | 7000 Nm3/h |
| LIN | 1 ppm O2 | 2000 Nm3/h | 0 |
| LAR | 1 ppm O2 | maximal | Maximal |
| N2 | 1 ppm O2 | maximal | Maximal |

**Figur 1A** unterscheidet sich dadurch von Figur 1, dass der fünfte Luftstrom 301 zur zweiten Turbine 14t nicht unter dem ersten Luftdruck steht, sondern unter dem zweiten Luftdruck stromabwärts des Luftnachverdichters 3b. Über die zusätzliche Leistung 400 wird er vom Austritt des Luftnachverdichters 3b zum warmen Ende des Hauptwärmetauschers und weitere über Leitung 301 zum Turbineneintritt geführt.

In **Figur 1B** herrscht ein noch höherer Eintrittsdruck an der Turbine 14t, indem der fünfte Luftstrom 401/301 unter dem dritten Luftdruck stromabwärts des warmen Nachverdichters 202 steht.

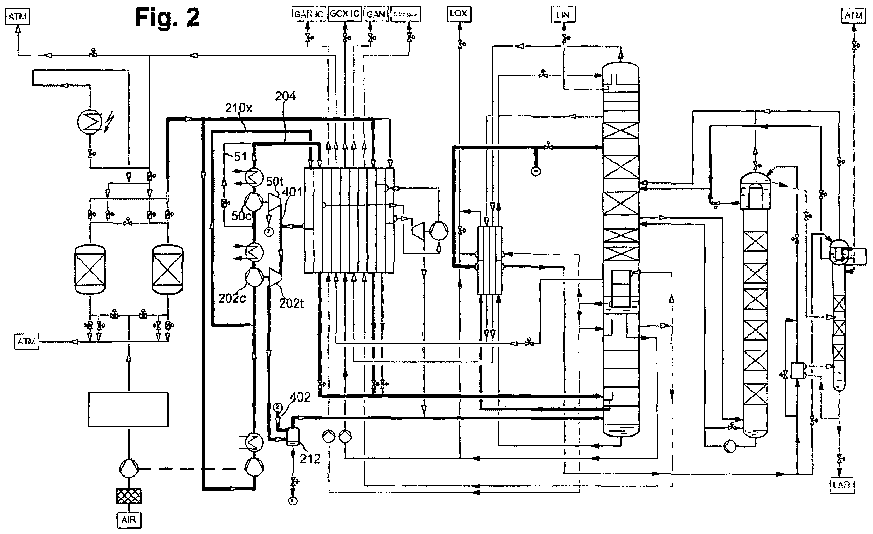

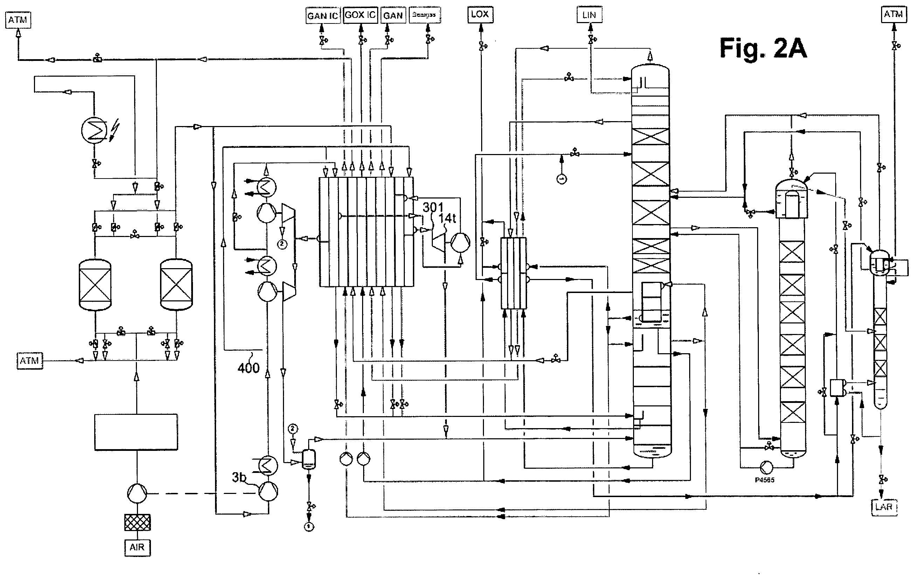

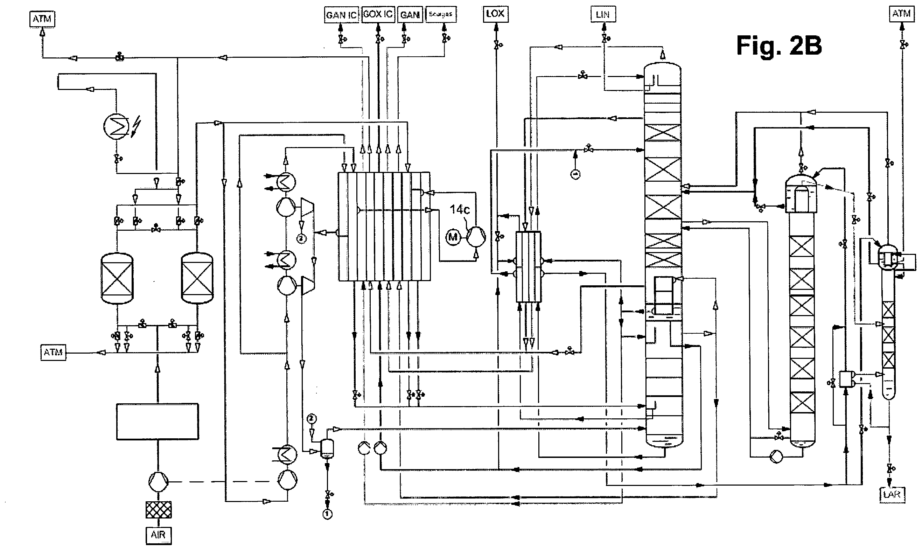

**Figur 2** unterscheidet sich von Figur 1 durch eine weitere Turbinen-Verdichter-Kombination 50t/50c, die nur im ersten Betriebsmodus durchströmt wird. Eine dritte Turbine 50t treibt dann einen dritten turbinengetriebenen Nachverdichter 50c an. In der dritten Turbine wird ein siebter Luftstrom 401, der durch einen vierten Teil 401 des zweiten Luftstroms 204 gebildet wird, arbeitsleistend entspannt. Die dritte Turbine 50t wird mit den gleichen Ein- und Austrittsdrücken wie die erste Turbine 202t betrieben. Der entspannte siebte Luftstrom 402 wird in den Abscheider 212 eingeleitet. Im ersten Betriebsmodus läuft der Nachverdichter 50c und erzeugt den "dritten Luftdruck" in Leitung 204. Die beiden Nachverdichter 202c und 50c bilden in dem Ausführungsbeispiel das "Nachverdichtungssystem".

Im zweiten Betriebsmodus wird der siebte Luftstrom auf Null reduziert, und der zweite Luftstrom fließt über eine Bypassleitung 51 an dem zweiten Nachverdichter 50c vorbei. In dieser Betriebsweise erzeugt der Nachverdichter 202c den "dritten Luftdruck" in den Leitungen 51 und 204. Der dritte Luftdruck ist im zweiten Betriebsmodus niederiger als im ersten Betriebsmodus.

Bei allen Ausführungsbeispielen befindet sich stromabwärts jeder Verdichterstufe je ein Nachkühler zur Entfernung der Verdichtungswärme.

Ein weiterer Unterschied gegenüber Figur 1 besteht bei der Ausführungsform der Figur 2 darin, dass der Turbineneintrittsdruck an der ersten Turbine 202t (wie auch an der dritten 50t) kleiner als der zweite Luftdruck ist, weil die Turbinenluft (der dritte wie auch der siebte Luftstrom) stromaufwärts des ersten turbinengetriebenen Nachverdichters 202c abgezweigt wird (Leitung 210x). Ein solcher erniedrigter Turbineneintrittsdruck (der ein erhöhtes Niveau des zweiten Luftdrucks ermöglicht) kann sinngemäß auch bei Figur 1 angewandt werden.

Selbstverständlich sind bei den Figuren 1 und 2 auch Zwischenformen zwischen dem ersten Betriebsmodus und dem reinen Gasbetrieb möglich, bei denen LOX und/oder LIN in reduzierter Menge größer null produziert werden; diese gelten dann ebenfalls als "zweiter Betriebsmodus im Sinne der Patentansprüche. Jedenfalls ist bei diesen Ausführungsbeispielen die Turbinen-Kaltverdichter-Kombination im ersten Betriebsmodus abgeschaltet. Sie wird nur im zweiten Betriebsmodus in Funktion genommen.

**Figur 2A** unterscheidet sich dadurch von Figur 2, dass der fünfte Luftstrom 301 zur zweiten Turbine 14t nicht unter dem ersten Luftdruck steht, sondern unter dem zweiten Luftdruck stromabwärts des Luftnachverdichters 3b. Über die zusätzliche Leistung 400 wird er vom Austritt des Luftnachverdichters 3b zum warmen Ende des Hauptwärmetauschers und weitere über Leitung 301 zum Turbineneintritt geführt.

In **Figur 2B** wird die zweite Turbine 14t weggelassen. Der Kaltverdichter 14c wird von einem Elektromotor angetrieben.

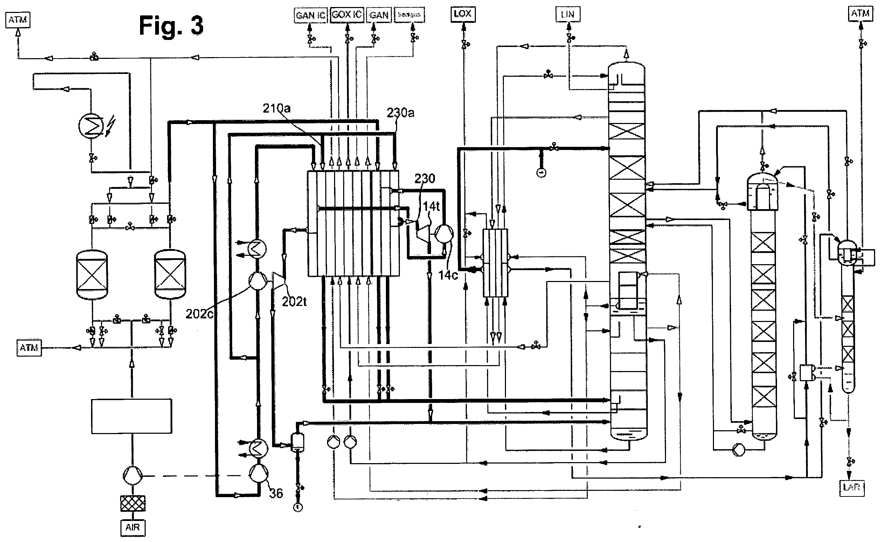

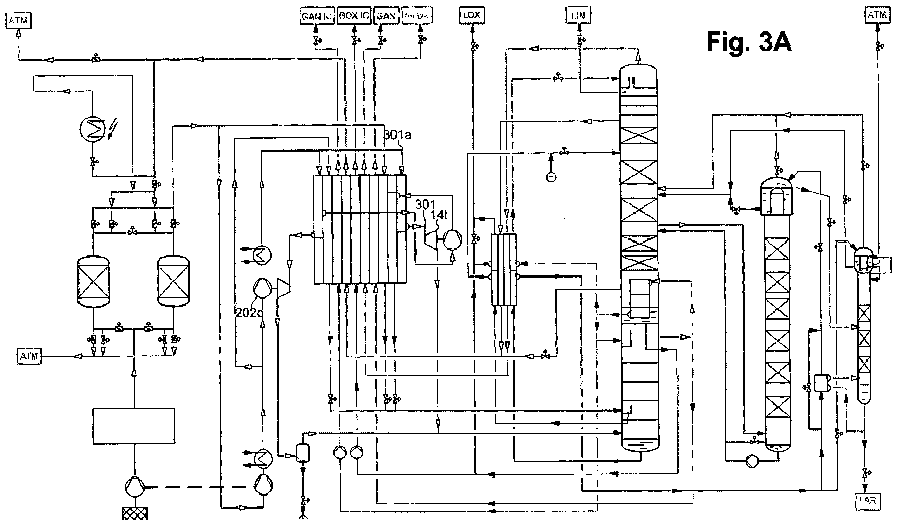

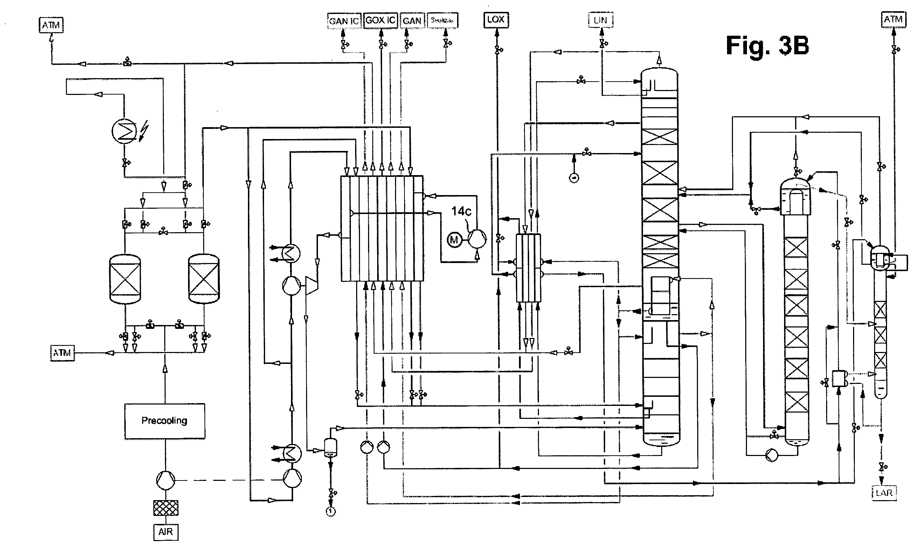

Bei dem Ausführungsbeispiel der **Figur 3** wird die Turbinen-Kaltverdichter-Kombination auch im maximalen Flüssigbetrieb, also im ersten Betriebsmodus, nicht abgeschaltet. Figur 3 unterscheidet sich außerdem von Figur 1 durch die folgenden Verfahrensmerkmale:
- Der vierte Luftstrom 210a/220 wird bereits stromaufwärts des ersten Nachverdichters 202c abgezweigt und als Drosselstrom relativ niedrigen Drucks eingesetzt.
- Ebenso wird die Luft 230a/230 für die zweite Turbine 14t (der dritte Teil des zweiten Luftstroms) bereits stromaufwärts des ersten Nachverdichters 202c abgezweigt.

Hier wird also die Druckerhöhung durch die beiden turbinengetriebenen Nachverdichter 202c und 14c hauptsächlich für die Druckerhöhung in dem sechsten Luftstrom genutzt, der als Drosselstrom besonders hohen Drucks eingesetzt wird.. Die erste Turbine 202t wird unter einem höheren Eintrittsdruck betrieben als die zweite Turbine 14t.

Mit der Verringerung der Flüssigproduktion beim Übergang von den ersten auf den zweiten Betriebsfall wird die Last der zweiten Turbine 14t erhöht und die Last der ersten Turbine 202 vermindert.

Abweichend von der Darstellung in Figur 3 können der Drosselstrom 210a und der Turbinenstrom 230a auch erst nach dem turbinengetriebenen warmen Nachverdichter 202 abgezweigt werden, wie es in Figur 1 dargestellt ist.

In allen Varianten der Erfindung kann die zweite Turbine 14t auch so ausgebildet sein, dass sie nicht in die Hochdrucksäule 10, sondern in die Niederdrucksäule 12 einbläst; durch das entsprechend erhöhte Druckverhältnis kann mehr Energie für den Kaltverdichter zur Verfügung gestellt werden.

**Figur 3A** unterscheidet sich dadurch von Figur 3, dass der fünfte Luftstrom 301 zur zweiten Turbine 14t nicht unter dem ersten Luftdruck steht, sondern unter dem dritten Luftdruck stromabwärts des warmen Nachverdichters 202c. Über die zusätzliche Leitung 301a wird er zum warmen Ende des Hauptwärmetauschers und weitere über Leitung 301 zum Turbineneintritt geführt.

In **Figur 3B** wird die zweite Turbine 14t weggelassen. Der Kaltverdichter 14c wird von einem Elektromotor angetrieben.

Der Effekt der Erfindung kann weiter verstärkt werden, indem dem Kaltverdichter 14c ein abschaltbarer zweiter Kaltverdichter nachgeschaltet ist. Diese Abwandlung kann bei allen Ausführungsbeispielen angewendet werden, beispielsweise bei denjenigen der Figuren 3 und 3B. Der Strom aus dem ersten Kaltverdichter 14c wird im zweiten Betriebsmodus durch einen zweiten Kaltverdichter geleitet, bevor wieder in den Hauptwärmetauscher eingeführt wird. Der zweite Kaltverdichter wird mit einem Elektromotor angetrieben. Im ersten Betriebsmodus wird der zweite Kaltverdichter ausgeschaltet und der Strom aus dem ersten Kaltverdichter 14c fließt über eine Bypass-Leitung an dem zweiten Kaltverdichter vorbei.

## Patentansprüche

1. Verfahren zur Tieftemperaturzerlegung von Luft in einer Luftzerlegungsanlage, die einen Hauptluftverdichter, einen Hauptwärmetauscher (8) und ein Destillationssäulen-System mit einer Hochdrucksäule (10) und einer Niederdrucksäule aufweist, wobei
- die gesamte Einsatzluft (1) in dem Hauptluftverdichter (3a) auf einen ersten Luftdruck verdichtet wird, der mindestens 3 bar höher als der Betriebsdruck der Hochdrucksäule ist, um einen verdichteten Gesamtluftstrom (4, 7) zu bilden,
- ein erster Teil des verdichteten Gesamtluftstroms als erster Luftstrom (100) unter dem ersten Luftdruck in dem Hauptwärmetauscher (8) abgekühlt und verflüssigt oder pseudo-verflüssigt, anschließend entspannt (101) und in das Destillationssäulen-System eingeleitet (102, 9) wird,
- ein zweiter Teil des verdichteten Gesamtluftstroms als zweiter Luftstrom (200) in einem Luftnachverdichter (3b) auf einen zweiten Luftdruck nachverdichtet, der höher als der erste Luftdruck ist, und mindestens ein erster Teil des zweiten Luftstroms in einem Nachverdichtungssystem auf einen dritten Luftdruck weiterverdichtet wird, der höher als der zweite Luftdruck ist, wobei das Nachverdichtungssystem mindestens einen ersten turbinengetriebenen Nachverdichter (202c) aufweist,
- ein erster Teilstrom des zweiten Luftstroms als dritter Luftstrom (210) unter einem ersten Turbineneintrittsdruck in eine erste Turbine (202t) eingeleitet, dort arbeitsleistend entspannt und anschließend in das Destillationssäulen-System eingeleitet (211, 213, 22) wird, wobei der erste Turbineneintrittsdruck größer als der erste Luftdruck, aber nicht größer als der dritte Luftdruck ist, und die erste Turbine (202t) den ersten turbinengetriebenen Nachverdichter (202c) antreibt,
- ein zweiter Teilstrom des zweiten Luftstroms als vierter Luftstrom (220) unter einem Druck, der größer als der erste Luftdruck, aber nicht größer als der dritte Luftdruck ist, in dem Hauptwärmetauscher (8) abgekühlt und verflüssigt oder pseudo-verflüssigt, anschließend entspannt (221) und in das Destillationssäulen-System eingeleitet (222) wird,
- mindestens zeitweise mindestens ein Flüssigprodukt (30; 39; LAR) in dem Destillationssäulen-System gewonnen und aus der Luftzerlegungsanlage abgezogen wird,
- ein erster Produktstrom (37; 43) flüssig aus dem Destillationssäulen-System abgezogen, in flüssigem Zustand auf einen ersten erhöhten Produktdruck gebracht (41; 43), in dem Hauptwärmetauscher (8) verdampft oder pseudo-verdampft und angewärmt wird und
- der angewärmte erste Produktstrom (42; 45) als erstes Druckgasprodukt aus der Luftzerlegungsanlage abgezogen wird, wobei
- mindestens zeitweise
- ein dritter Teilstrom des zweiten Luftstroms als sechster Luftstrom (230) in dem Hauptwärmetauscher (8) auf eine erste Zwischentemperatur abgekühlt, in einem Kaltverdichter (14c) auf einen vierten Luftdruck weiterverdichtet wird, der höher als der dritte Luftdruck ist und
- der weiterverdichtete sechste Luftstrom (231) unter dem vierten Luftdruck in dem Hauptwärmetauscher (8) abgekühlt und verflüssigt oder pseudo-verflüssigt, anschließend entspannt (233) und in das Destillationssäulen-System eingeleitet (234, 9) wird,
- in einem ersten Betriebsmodus eine erste Gesamtmenge an Flüssigprodukten (30; 39; LAR) aus der Luftzerlegungsanlage abgezogen wird,
- in einem zweiten Betriebsmodus eine zweite Gesamtmenge an Flüssigprodukten (30; 39; LAR) aus der Luftzerlegungsanlage abgezogen wird, die geringer als die erste Gesamtmenge ist, und dass
- in dem ersten Betriebsmodus die Luftmenge, die als sechster Luftstrom (230) durch den Kaltverdichter (14c) geleitet wird, geringer ist als im zweiten Betriebsmodus.

2. Verfahren nach Anspruch 1, **dadurch gekennzeichnet, dass**
- mindestens zeitweise
- ein dritter Teil des verdichteten Gesamtluftstroms als fünfter Luftstrom (301) unter dem ersten Luftdruck in eine zweite Turbine (14t) eingeleitet und dort arbeitsleistend entspannt wird,
- die zweite Turbine (14t) einen zweiten turbinengetriebenen Nachverdichter antreibt, der durch den Kaltverdichter (14c) gebildet wird,
- der arbeitsleistend entspannte fünfte Luftstrom (302) in das Destillationssäulen-System eingeleitet (13) wird und dass
- in dem ersten Betriebsmodus die Luftmenge, die als fünfter Luftstrom (14t) durch die zweite Turbine geleitet wird, geringer ist als im zweiten Betriebsmodus.

3. Verfahren nach Anspruch 2, **dadurch gekennzeichnet, dass**
- in dem ersten Betriebsmodus
- eine erste Luftmenge des verdichteten Gesamtluftstroms den ersten Luftstrom (100) bildet und
- ein zweite Luftmenge des verdichteten Gesamtluftstroms den zweiten Luftstrom (200) bildet
und
- in dem zweiten Betriebsmodus
- eine dritte Luftmenge des verdichteten Gesamtluftstroms, die höher als die erste Luftmenge ist, den ersten Luftstrom (100) bildet und
- eine vierte Luftmenge des verdichteten Gesamtluftstroms, die geringer als die zweite Luftmenge ist, den zweiten Luftstrom (200) bildet.

4. Verfahren nach einem der Ansprüche 1 bis 3, **dadurch gekennzeichnet, dass** der dritte Luftstrom (210) unter dem dritten Luftdruck in die erste Turbine (202t) eingeführt wird.

5. Verfahren nach einem der Ansprüche 1 bis 4, **dadurch gekennzeichnet, dass** der vierte Luftstrom (220) in der ersten Turbine (202t) auf einen Austrittsdruck entspannt wird, der gleich dem Betriebsdruck der Hochdrucksäule (10) ist.

6. Verfahren nach einem der Ansprüche 1 bis 5, **dadurch gekennzeichnet, dass** der fünfte Luftstrom (301) in der zweiten Turbine (14t) auf einen Austrittsdruck entspannt wird, der gleich dem Betriebsdruck der Hochdrucksäule (10) ist.

7. Verfahren nach einem der Ansprüche 1 bis 5, **dadurch gekennzeichnet; dass** in dem zweiten Betriebsmodus der fünfte Luftstrom (301) in der zweiten Turbine (14t) auf einen Austrittsdruck entspannt wird, der gleich dem Betriebsdruck der Niederdrucksäule (12) ist.

8. Verfahren nach einem der Ansprüche 1 bis 7, **dadurch gekennzeichnet, dass** in beiden Betriebsmodi mindestens ein Teil mindestens eines der folgenden Luftströme jeweils stromabwärts seiner Entspannung in die Hochdrucksäule (10) eingeleitet wird:
- erster Luftstrom (102),
- dritter Luftstrom (211),
- vierter Luftstrom (220).

9. Verfahren nach einem der Ansprüche 1 bis 8, **dadurch gekennzeichnet, dass** mindestens ein Teil des entspannten fünften Luftstroms (302) in die Hochdrucksäule (10) eingeleitet (13) wird.

10. Verfahren nach einem der Ansprüche 1 bis 9, **dadurch gekennzeichnet, dass** der Hauptluftverdichter (3a) und der Luftnachverdichter (3b) durch eine kombinierte Maschine mit gemeinsamem Antrieb gebildet werden.

11. Verfahren nach einem der Ansprüche 1 bis 10 **dadurch gekennzeichnet, dass** der vierte Luftstrom (220) in dem zweiten Betriebsmodus eine geringere Menge umfasst als in dem ersten Betriebsmodus.

12. Verfahren nach einem der Ansprüche 1 bis 11, **dadurch gekennzeichnet, dass** in dem zweiten Betriebsmodus ein vierter Teilstrom des zweiten Luftstroms als siebter Luftstrom (401) in einer dritten Turbine (50t) arbeitsleistend entspannt und anschließend in das Destillationssäulen-System eingeleitet wird.

13. Verfahren nach Anspruch 12, **dadurch gekennzeichnet, dass** in dem ersten Betriebsmodus die dritte Turbine (50t) einen dritten turbinengetriebenen Nachverdichter (50c) antreibt, der Teil des Nachverdichtungssystems ist.

14. Verfahren nach einem der Ansprüche 1 bis 13, **dadurch gekennzeichnet, dass**
- ein zweiter Produktstrom flüssig aus dem Destillationssäulen-System abgezogen, in flüssigem Zustand auf einen zweiten erhöhten Produktdruck gebracht, in dem Hauptwärmetauscher verdampft oder pseudo-verdampft und angewärmt wird und
- der angewärmte zweite Produktstrom als zweites Druckgasprodukt aus der Luftzerlegungsanlage abgezogen wird,
wobei insbesondere
- der erste Produktstrom durch Sauerstoff (37) aus dem unteren Bereich der Niederdrucksäule und/oder
- der zweite Produktstrom durch Stickstoff (43) aus dem oberen Bereich der Hochdrucksäule oder aus einem Kopfkondensator der Hochdrucksäule
gebildet wird.

15. Luftzerlegungsanlage zur Tieftemperaturzerlegung von Luft mit
- einem Hauptwärmetauscher (8),
- einem Destillationssäulen-System, das eine Hochdrucksäule (10) und eine Niederdrucksäule aufweist,
- einem Hauptluftverdichter (3a) zum Verdichten der gesamten Einsatzluft (1) auf einen ersten Luftdruck, der mindestens 3 bar höher als der Betriebsdruck der Hochdrucksäule ist, um einen verdichteten Gesamtluftstrom (4, 7) zu bilden,
- Mitteln zum Abkühlen eines ersten Teils des verdichteten Gesamtluftstroms als ersten Luftstrom (100) unter dem ersten Luftdruck in dem Hauptwärmetauscher (8),
- Mitteln zum Entspannen (101) und Einleiten (102, 9) in das Destillationssäulen-System des abgekühlten ersten Luftstroms,
- einem Luftnachverdichter (3b) zum Nachverdichten eines zweiten Teils des verdichteten Gesamtluftstroms als zweiten Luftstrom (200) auf einen zweiten Luftdruck
- einem Nachverdichtungssystem zum Weiterverdichten mindestens eines ersten Teils des zweiten Teilstroms auf einen dritten Luftdruck, der höher als der zweite Luftdruck ist, wobei das Nachverdichtungssystem mindestens einen ersten turbinengetriebenen Nachverdichter (202c) aufweist,
- einer ersten Turbine (202t) zum arbeitsleistenden Entspannen eines ersten Teilstroms des zweiten Luftstroms als dritten Luftstrom (210), von einem ersten Turbineneintrittsdruck aus, der größer als der erste Luftdruck, aber nicht größer als der dritte Luftdruck ist, wobei die erste Turbine (202t) mit dem ersten turbinengetriebenen Nachverdichter (202c) gekoppelt ist,
- Mitteln zum Abkühlen eines zweiten Teilstroms des zweiten Luftstroms als vierten Luftstrom (220) unter einem Druck, der größer als der erste Luftdruck, aber nicht größer als der dritte Luftdruck ist, in dem Hauptwärmetauscher (8),
- Mitteln zum Entspannen (221) und Einleiten (222) in das Destillationssäulen-System des abgekühlten vierten Luftstroms,
- Mitteln zum Gewinnen mindestens eines Flüssigprodukts (30; 39; LAR) in dem Destillationssäulen-System und Mittel zum Abziehen aus der Luftzerlegungsanlage,
- Mitteln zum flüssigen Abziehen eines ersten Produktstroms (37; 43) aus dem Destillationssäulen-System abgezogen, zur Druckerhöhung in flüssigem Zustand auf einen ersten erhöhten Produktdruck (41; 44), zum Anwärmen in dem Hauptwärmetauscher (8) und mit
- Mitteln zum Abziehen des angewärmten ersten Produktstroms (42; 45) als erstes Druckgasprodukt aus der Luftzerlegungsanlage,
- Mittel zum Abkühlen eines dritten Teilstroms des zweiten Luftstroms als sechstem Luftstrom (230) in dem Hauptwärmetauscher (8) auf eine erste Zwischentemperatur,
- einen Kaltverdichter (14c) zum Weiterverdichten des sechsten Luftstroms auf einen vierten Luftdruck, der höher als der dritte Luftdruck ist,
- Mittel zum Abkühlen des weiterverdichteten sechsten Luftstroms unter dem vierten Luftdruck in dem Hauptwärmetauscher (8),
- Mittel zum Entspannen (233) und Einleiten (234, 9) in das Destillationssäulen-System des abgekühlten sechsten Luftstroms
- und mit Mitteln zum Umschalten zwischen einem ersten und einem zweiten Betriebsmodus, wobei
- in einem ersten Betriebsmodus eine erste Gesamtmenge an Flüssigprodukten (30; 39; LAR) aus der Luftzerlegungsanlage abgezogen wird,
- in einem zweiten Betriebsmodus eine zweite Gesamtmenge an Flüssigprodukten (30; 39; LAR) aus der Luftzerlegungsanlage abgezogen wird, die geringer als die erste Gesamtmenge ist, und dass
- in dem ersten Betriebsmodus die Luftmenge, die als sechster Luftstrom (230) durch den Kaltverdichter (14c) geleitet wird, geringer ist als im zweiten Betriebsmodus.

## Claims

1. Method for the cryogenic separation of air in an air separation plant which has a main air compressor, a main heat exchanger (8) and a distillation column system with a high-pressure column (10) and a low-pressure column, wherein
- all of the feed air (1) is compressed in the main air compressor (3a) to a first air pressure which is at least 3 bar higher than the operating pressure of the high-pressure column, in order to form a compressed total air flow (4, 7),
- a first part of the compressed total air flow, as first air flow (100) at the first air pressure, is cooled and liquefied or pseudo-liquefied in the main heat exchanger (8), then expanded (101) and introduced (102, 9) into the distillation column system,
- a second part of the compressed total air flow, as second air flow (200), is post-compressed in an air post-compressor (3b) to a second air pressure which is higher than the first air pressure, and at least a first part of the second air flow is further compressed in a post-compression system to a third air pressure which is higher than the second air pressure, wherein the post-compression system has at least one first turbine-driven post-compressor (202c),
- a first partial flow of the second air flow as third air flow (210) at a first turbine inlet pressure is introduced into a first turbine (202t), where it is expanded, performing work, and is then introduced (211, 213, 22) into the distillation column system, wherein the first turbine inlet pressure is greater than the first air pressure but is not greater than the third air pressure, and the first turbine (202t) drives the first turbine-driven post-compressor (202c),
- a second partial flow of the second air flow as fourth air flow (220), at a pressure which is greater than the first air pressure but not greater than the third air pressure, is cooled and liquefied or pseudo-liquefied in the main heat exchanger (8), then expanded (221) and introduced (222) into the distillation column system,
- at least occasionally at least one liquid product (30; 39; LAR) is obtained in the distillation column system and is drawn off from the air separation plant,
- a first product flow (37; 43) is drawn off in liquid form from the distillation column system, is raised in the liquid state to a first elevated product pressure (41; 43), is evaporated or pseudo-evaporated and heated in the main heat exchanger (8) and
- the heated first product flow (42; 45) is drawn off from the air separation plant as first compressed gas product,
wherein
- at least occasionally
- a third partial flow of the second air flow as sixth air flow (230) in the main heat exchanger (8) is cooled to a first intermediate temperature, is further compressed in a cold compressor (14c) to a fourth air pressure which is higher than the third air pressure and
- the further compressed sixth air flow (231) at the fourth air pressure is cooled and liquefied or pseudo-liquefied in the main heat exchanger (8), then expanded (233) and introduced (234, 9) into the distillation column system,
- in a first mode of operation a first total quantity of liquid products (30; 39; LAR) is drawn off from the air separation plant,
- in a second mode of operation a second total quantity of liquid products (30; 39; LAR), which is less than the first total quantity, is drawn off from the air separation plant, and in that
- in the first mode of operation the quantity of air which is guided as sixth air flow (230) through the cold compressor (14c) is less than in the second mode of operation.

2. Method according to Claim 1, **characterized in that**
- at least occasionally
- a third part of the compressed total air flow as fifth air flow (301) at the first air pressure is introduced into a second turbine (14t) where it is expanded, performing work,
- the second turbine (14t) drives a second turbine-driven post-compressor which is formed by the cold compressor (14c),
- the fifth air flow (302), which has been expanded, performing work, is introduced (13) into the distillation column system and **in that**
- in the first mode of operation the quantity of air which is guided as fifth air flow (14t) through the second turbine is less than in the second mode of operation.

3. Method according to Claim 2, **characterized in that**
- in the first mode of operation
- a first quantity of air of the compressed total air flow forms the first air flow (100) and
- a second quantity of air of the compressed total air flow forms the second air flow (200)
and
- in the second mode of operation
- a third quantity of air of the compressed total air flow, which is greater than the first quantity of air, forms the first air flow (100) and
- a fourth quantity of air of the compressed total air flow, which is less than the second quantity of air, forms the second air flow (200).

4. Method according to one of Claims 1 to 3, **characterized in that** the third air flow (210) is introduced into the first turbine (202t) at the third air pressure.

5. Method according to one of Claims 1 to 4, **characterized in that** the fourth air flow (220) is expanded in the first turbine (202t) to an outlet pressure which is equal to the operating pressure of the high-pressure column (10).

6. Method according to one of Claims 1 to 5, **characterized in that** the fifth air flow (301) is expanded in the second turbine (14t) to an outlet pressure which is equal to the operating pressure of the high-pressure column (10).

7. Method according to one of Claims 1 to 5, **characterized in that** in the second mode of operation the fifth air flow (301) is expanded in the second turbine (14t) to an outlet pressure which is equal to the operating pressure of the low-pressure column (12).

8. Method according to one of Claims 1 to 7, **characterized in that** in both modes of operation at least one part of at least one of the following air flows is respectively introduced into the high-pressure column (10) downstream of the expansion of said air flow:
- first air flow (102),
- third air flow (211),
- fourth air flow (220).

9. Method according to one of Claims 1 to 8, **characterized in that** at least one part of the expanded fifth air flow (302) is introduced (13) into the high-pressure column (10).

10. Method according to one of Claims 1 to 9, **characterized in that** the main air compressor (3a) and the air post-compressor (3b) are formed by a combined machine with common drive.

11. Method according to one of Claims 1 to 10, **characterized in that** the fourth air flow (220) in the second mode of operation comprises a smaller quantity than in the first mode of operation.

12. Method according to one of Claims 1 to 11, **characterized in that** in the second mode of operation a fourth partial flow of the second air flow as seventh air flow (401) is expanded, performing work, in a third turbine (50t) and is then introduced into the distillation column system.

13. Method according to Claim 12, **characterized in that** in the first mode of operation the third turbine (50t) drives a third turbine-driven post-compressor (50c) which is part of the post-compression system.

14. Method according to one of Claims 1 to 13, **characterized in that**
- a second product flow is drawn off in liquid form from the distillation column system, is raised in the liquid state to a second elevated product pressure, is evaporated or pseudo-evaporated and heated in the main heat exchanger and
- the heated second product flow is drawn off from the air separation plant as second compressed gas product,
wherein in particular
- the first product flow consists of oxygen (37) from the lower region of the low-pressure column and/or
- the second product flow consists of nitrogen (43) from the upper region of the high-pressure column or from a top condenser of the high-pressure column.

15. Air separation plant for the cryogenic separation of air with
- a main heat exchanger (8),
- a distillation column system having a high-pressure column (10) and a low-pressure column,
- a main air compressor (3a) for compressing all of the feed air (1) to a first air pressure which is at least 3 bar higher than the operating pressure of the high-pressure column, in order to form a compressed total air flow (4, 7),
- means for cooling a first part of the compressed total air flow as first air flow (100) at the first air pressure in the main heat exchanger (8),
- means for expanding (101) the cooled first air flow and for introducing (102, 9) this air flow into the distillation column system,
- an air post-compressor (3b) for post-compressing a second part of the compressed total air flow as second air flow (200) to a second air pressure,
- a post-compression system for further compressing at least a first part of the second partial flow to a third air pressure which is higher than the second air pressure, wherein the post-compression system has at least one first turbine-driven post-compressor (202c),
- a first turbine (202t) for the work-performing expansion of a first partial flow of the second air flow as third air flow (210), from a first turbine inlet pressure which is greater than the first air pressure but not greater than the third air pressure, wherein the first turbine (202t) is coupled to the first turbine-driven post-compressor (202c),
- means for cooling a second partial flow of the second air flow as fourth air flow (220) at a pressure which is greater than the first air pressure but not greater than the third air pressure, in the main heat exchanger (8),
- means for expanding (221) the cooled fourth air flow and for introducing (222) this air flow into the distillation column system,
- means for obtaining at least one liquid product (30; 39; LAR) in the distillation column system and means for drawing it off from the air separation plant,
- means for drawing off, in liquid form, a first product flow (37; 43) from the distillation column system, for increasing pressure in the liquid state to a first elevated product pressure (41; 44), for heating in the main heat exchanger (8) and with
- means for drawing off the heated first product flow (42; 45) as first compressed gas product from the air separation plant,
- means for cooling a third partial flow of the second air flow as sixth air flow (230) in the main heat exchanger (8) to a first intermediate temperature,
- a cold compressor (14c) for further compressing the sixth air flow to a fourth air pressure which is higher than the third air pressure,
- means for cooling the further compressed sixth air flow at the fourth air pressure in the main heat exchanger (8),
- means for expanding (233) the cooled sixth air flow and for introducing (234, 9) this air flow into the distillation column system,
- and with means for switching between a first and a second mode of operation, wherein
- in a first mode of operation a first total quantity of liquid products (30; 39; LAR) is drawn off from the air separation plant,
- in a second mode of operation a second total quantity of liquid products (30; 39; LAR) is drawn off from the air separation plant, which is less than the first total quantity, and
- in the first mode of operation the quantity of air which as sixth air flow (230) is guided through the cold compressor (14c) is less than in the second mode of operation.

## Revendications

1. Procédé de séparation cryogénique de l'air dans une installation de séparation de l'air, qui présente un compresseur d'air principal, un échangeur de chaleur principal (8) et un système de colonnes de distillation avec une colonne à haute pression (10) et une colonne à basse pression, dans lequel
- on comprime tout l'air de charge (1) dans le compresseur d'air principal (3a) à une première pression d'air, qui est supérieure d'au moins 3 bar à la pression de service de la colonne à haute pression, afin de former un courant d'air total comprimé (4, 7),
- on refroidit et on liquéfie ou on pseudo-liquéfie une première partie du courant d'air total comprimé comme premier courant d'air (100) sous la première pression d'air dans l'échangeur de chaleur principal (8), puis on le détend et on l'introduit dans le système de colonnes de distillation (102, 9),
- on recomprime une deuxième partie du courant d'air total comprimé comme deuxième courant d'air (200) dans un recompresseur d'air (3b) à une deuxième pression d'air, qui est plus élevée que la première pression d'air, et on surcomprime au moins une première partie du deuxième courant d'air dans un système de recompression à une troisième pression d'air, qui est plus élevée que la deuxième pression d'air, dans lequel le système de recompression présente au moins un premier recompresseur (202c) entraîné par une turbine,
- on introduit un premier courant partiel du deuxième courant d'air comme troisième courant d'air (210) sous une première pression d'entrée de turbine dans une première turbine (202t), on l'y détend en produisant un travail et ensuite on l'introduit dans le système de colonnes de distillation (211, 213, 22), dans lequel la première pression d'entrée de turbine est plus élevée que la première pression d'air, mais n'est pas plus élevée que la troisième pression d'air, et la première turbine (202t) entraîne le premier recompresseur (202c) entraîné par une turbine,
- on refroidit et on liquéfie ou on pseudo-liquéfie un deuxième courant partiel du deuxième courant d'air comme quatrième courant d'air (220) sous une pression, qui est plus élevée que la première pression d'air, mais qui n'est pas plus élevée que la troisième pression d'air, dans l'échangeur de chaleur principal (8), puis on le détend (221) et on l'introduit (222) dans le système de colonnes de distillation,
- on produit au moins temporairement au moins un produit liquide (30; 39; LAR) dans le système de colonnes de distillation et on l'aspire hors de l'installation de séparation de l'air,
- on aspire un premier courant de produit (37; 43) à l'état liquide hors du système de colonnes de distillation, on le porte à l'état liquide à une première pression de produit accrue (41; 43), on le vaporise ou le pseudo-vaporise et on l'échauffé dans l'échangeur de chaleur principal (8) et
- on aspire le premier courant de produit échauffé (42; 45) comme premier produit de gaz sous pression hors de l'installation de séparation de l'air,
dans lequel
- au moins temporairement
- on refroidit un troisième courant partiel du deuxième courant d'air comme sixième courant d'air (230) dans l'échangeur de chaleur principal (8) à une première température intermédiaire, on le recomprime dans un compresseur à froid (14c) à une quatrième pression d'air, qui est plus élevée que la troisième pression d'air et
- on refroidit et on liquéfie ou on pseudo-liquéfie le sixième courant d'air recomprimé (231) sous la quatrième pression d'air dans l'échangeur de chaleur principal, puis on le détend (233) et on l'introduit dans le système de colonnes de distillation (234, 9)
- dans un premier mode de fonctionnement on aspire une première quantité totale de produits liquides (30; 39; LAR) hors de l'installation de séparation de l'air,
- dans un deuxième mode de fonctionnement on aspire une deuxième quantité totale de produits liquides (30; 39; LAR), qui est plus petite que la première quantité totale, hors de l'installation de séparation de l'air, et
- dans le premier mode de fonctionnement, la quantité d'air, que l'on conduit comme sixième courant d'air (230) à travers le compresseur à froid (14c), est plus petite que dans le deuxième mode de fonctionnement.

2. Procédé selon la revendication 1, **caractérisé en ce que**
- au moins temporairement
- on introduit une troisième partie du courant d'air total comprimé comme cinquième courant d'air (301) sous la première pression d'air dans une deuxième turbine (14t) et on l'y détend en produisant un travail,
- la deuxième turbine (14t) entraîne un deuxième recompresseur entraîné par une turbine, qui est formé par le compresseur à froid (14c),
- on introduit le cinquième courant d'air détendu en produisant un travail (302) dans le système de colonnes de distillation (13), et **en ce que**
- dans le premier mode de fonctionnement, la quantité d'air, que l'on conduit comme cinquième courant d'air (14t) à travers la deuxième turbine, est plus petite que dans le deuxième mode de fonctionnement.

3. Procédé selon la revendication 2, **caractérisé en ce que**
- dans le premier mode de fonctionnement
- une première quantité d'air du courant d'air total comprimé forme le premier courant d'air (100) et
- une deuxième quantité d'air du courant d'air total comprimé forme le deuxième courant d'air (200), et
- dans le deuxième mode de fonctionnement
- une troisième quantité d'air du courant d'air total comprimé, qui est plus grande que la première quantité d'air, forme le premier courant d'air (100) et
- une quatrième quantité d'air du courant d'air total comprimé, qui est plus petite que la deuxième quantité d'air, forme le deuxième courant d'air (200).

4. Procédé selon l'une quelconque des revendications 1 à 3, **caractérisé en ce que** l'on introduit le troisième courant d'air (210) sous la troisième pression d'air dans la première turbine (202t).

5. Procédé selon l'une quelconque des revendications 1 à 4, **caractérisé en ce que** l'on détend le quatrième courant d'air (220) dans la première turbine (202t) à une pression de sortie, qui est égale à la pression de service de la colonne à haute pression (10).

6. Procédé selon l'une quelconque des revendications 1 à 5, **caractérisé en ce que** l'on détend le cinquième courant d'air (301) dans la deuxième turbine (14t) à une pression de sortie, qui est égale à la pression de service de la colonne à haute pression (10).

7. Procédé selon l'une quelconque des revendications 1 à 5, **caractérisé en ce que** dans le deuxième mode de fonctionnement on détend le cinquième courant d'air (301) dans la deuxième turbine (14t) à une pression de sortie, qui est égale à la pression de fonctionnement de la colonne à basse pression (12).

8. Procédé selon l'une quelconque des revendications 1 à 7, **caractérisé en ce que** dans les deux modes de fonctionnement on introduit au moins une partie d'au moins un des courants d'air suivants respectivement en aval de sa détente dans la colonne à haute pression (10):
- premier courant d'air (102),
- troisième courant d'air (211),
- quatrième courant d'air (220).

9. Procédé selon l'une quelconque des revendications 1 à 8, **caractérisé en ce que** l'on introduit (13) au moins une partie du cinquième courant d'air détendu (302) dans la colonne à haute pression (10).

10. Procédé selon l'une quelconque des revendications 1 à 9, **caractérisé en ce que** l'on forme le compresseur d'air principal (3a) et le recompresseur d'air (3b) par une machine combinée avec un entraînement commun.

11. Procédé selon l'une quelconque des revendications 1 à 10, **caractérisé en ce que** le quatrième courant d'air (220) comprend dans le deuxième mode de fonctionnement une plus petite quantité que dans le premier mode de fonctionnement.

12. Procédé selon l'une quelconque des revendications 1 à 11, **caractérisé en ce que** dans le deuxième mode de fonctionnement on détend un quatrième courant partiel du deuxième courant d'air comme septième courant d'air (401) dans une troisième turbine (50t) en produisant un travail puis on l'introduit dans le système de colonnes de distillation.

13. Procédé selon la revendication 12, **caractérisé en ce que** dans le premier mode de fonctionnement la troisième turbine (50t) entraîne un troisième recompresseur entraîné par une turbine (50c), qui fait partie du système de recompression.

14. Procédé selon l'une quelconque des revendications 1 à 13, **caractérisé en ce que**
- on aspire un deuxième courant de produit à l'état liquide hors du système de colonnes de distillation, on le porte à l'état liquide à une deuxième pression de produit accrue, on le vaporise ou on le pseudo-vaporise et on l'échauffé dans l'échangeur de chaleur principal et
- on aspire le deuxième courant de produit échauffé comme deuxième produit de gaz sous pression hors de l'installation de séparation de l'air,
dans lequel en particulier
- on forme le premier courant de produit par de l'oxygène (37) hors de la région inférieure de la colonne à basse pression et/ou
- on forme le deuxième courant de produit par de l'azote (43) hors de la région supérieure de la colonne à haute pression ou hors d'un condenseur de tête de la colonne à haute pression.

15. Installation de séparation de l'air pour la séparation cryogénique de l'air, avec
- un échangeur de chaleur principal (8),
- un système de colonnes de distillation, qui présente une colonne à haute pression (10) et une colonne à basse pression,
- un compresseur d'air principal (3a) pour la compression de tout l'air de charge (1) à une première pression d'air, qui est supérieure d'au moins 3 bar à la pression de service de la colonne à haute pression, afin de former un courant d'air total comprimé (4, 7),
- des moyens pour refroidir une première partie du courant d'air total comprimé comme premier courant d'air (100) sous la première pression d'air dans l'échangeur de chaleur principal (8),
- des moyens pour détendre (101) le premier courant d'air refroidi et l'introduire (102, 9) dans le système de colonnes de distillation,
- un recompresseur d'air (3b) pour la recompression d'une deuxième partie du courant d'air total comprimé comme deuxième courant d'air (200) à une deuxième pression d'air,
- un système de recompression pour la surcompression d'au moins une première partie du deuxième courant partiel à une troisième pression d'air, qui est plus élevée que la deuxième pression d'air, dans laquelle le système de recompression présente au moins un premier recompresseur (202c) entraîné par une turbine,
- une première turbine (202t) pour détendre en produisant un travail un premier courant partiel du deuxième courant d'air comme troisième courant d'air (210), à partir d'une première pression d'entrée de turbine, qui est plus élevée que la première pression d'air, mais qui n'est pas plus élevée que la troisième pression d'air, dans laquelle la première turbine (202t) est couplée avec le premier recompresseur entraîné par une turbine (202c),
- des moyens pour refroidir un deuxième courant partiel du deuxième courant d'air comme quatrième courant d'air (220) sous une pression, qui est plus élevée que la première pression d'air, mais qui n'est pas plus élevée que la troisième pression d'air, dans l'échangeur de chaleur principal (8),
- des moyens pour détendre (221) le quatrième courant d'air refroidi et l'introduire (222) dans le système de colonnes de distillation,
- des moyens pour produire au moins un produit liquide (30; 39; LAR) dans le système de colonnes de distillation et des moyens pour l'extraire hors de l'installation de séparation de l'air,
- des moyens pour extraire à l'état liquide un premier courant de produit (37; 43) hors du système de colonnes de distillation, pour augmenter sa pression à l'état liquide à une première pression de produit accrue (41; 44) et pour l'échauffer dans l'échangeur de chaleur principal (8), et avec
- des moyens pour extraire le premier courant de produit échauffé (42; 45) comme premier produit de gaz sous pression hors de l'installation de séparation de l'air,
- des moyens pour refroidir un troisième courant partiel du deuxième courant d'air comme sixième courant d'air (230) dans l'échangeur de chaleur principal (8) à une première température intermédiaire,
- un compresseur à froid (14c) pour surcomprimer le sixième courant d'air à une quatrième pression d'air, qui est plus élevée que la troisième pression d'air,
- des moyens pour refroidir le sixième courant d'air surcomprimé sous la quatrième pression d'air dans l'échangeur de chaleur principal (8),
- des moyens pour détendre (233) le sixième courant d'air refroidi et l'introduire (234, 9) dans le système de colonnes de distillation,
- et des moyens pour commuter entre un premier et un deuxième mode de fonctionnement, dans laquelle
- dans un premier mode de fonctionnement on aspire une première quantité totale de produits liquides (30; 39; LAR) hors de l'installation de séparation de l'air,
- dans un deuxième mode de fonctionnement on aspire une deuxième quantité totale de produits liquides (30; 39; LAR), qui est plus petite que la première quantité totale, hors de l'installation de séparation de l'air, et
- dans le premier mode de fonctionnement, la quantité d'air, que l'on conduit comme sixième courant d'air (230) à travers le compresseur à froid (14c), est plus petite que dans le deuxième mode de fonctionnement.
